Europäisches Patentamt

(19) European Patent Office

Office européen des brevets

(11) Publication number: **0 309 007 B1**

(12) **EUROPEAN PATENT SPECIFICATION**

(45) Date of publication of patent specification:
22.05.91 Bulletin 91/21

(51) Int. Cl.⁵: **B01D 39/20, B01D 29/085, G01N 27/00, G01N 31/12**

(21) Application number: 88201016.8

(22) Date of filing: 19.05.88

(54) **Method for separating an aqueous liquid and active carbon including adsorbed material.**

The file contains technical information submitted after the application was filed and not included in this specification

(43) Date of publication of application:
29.03.89 Bulletin 89/13

(45) Publication of the grant of the patent:
22.05.91 Bulletin 91/21

(84) Designated Contracting States:
AT BE CH DE ES FR GB GR IT LI LU NL SE

(56) References cited:
DE-C- 943 856
DE-C- 971 098
US-A- 2 979 207
US-A- 4 172 705

(73) Proprietor: EUROGLAS B.V.
Buitenwatersloot 341
NL-2614 GS Delft (NL)

(72) Inventor: Kampert, Hendrikus Gerardus Adrianus
Jachthoornlaan 26
NL-3438 RM Nieuwegein (NL)

(74) Representative: Baarslag, Aldert D. et al
Nederlandsch Octrooibureau
Scheveningseweg 82 P.O. Box 29720
NL-2502 LS 's-Gravenhage (NL)

# Description

The invention relates to a method for analysing adsorbed material in apueous liquids comprising the steps of :
- adsorption of said material to be analyzed to activated carbon ;
- separation of said aqueous liquid and said activated carbon including the adsorbed material in a filter element ;
- heating of said filter element containing activated carbon including the adsorbed material in a flow of oxygen of about 1000°C.

Such a method and the device for carrying out such a method is generally known ; see log. DIN 38409 and NL-A-7801376. A sample to be analyzed is (after preliminary treatment) introduced into said device at elevated temperature with oxygen, and the organic halogen compounds are converted into their acids. The gasses generated are carried with the gas flow through an absorber to a titration cell. The absorber is filled with concentrated sulphuric acid and functions to eliminate the water from the flow of gas. In the titration cell a solution is present in which the concentrations of silver ions is kept constant to about $10^{-7}M$. Keeping the concentration constant is realised by continuously measuring the concentration of silver ions. If this concentration is lower than a predetermined value a number of silver ions is generated with a silver electrode in a coulometric way, until the concentration reaches the predetermined value. When the acid originating from the organic halogen substance enters the cell, the halide of the acid reacts with the silver ions and a silver halide is precipitated. As soon as the decrease of concentration of silver ions occurs, "fresh" silver ions are coulometrically generated until all the silver taken away is compensated for. From the integral of the current in time the amount of generated silver and so the quantity of introduced halogen can be deducted as halide or moles halogen.

Direct analysis of organic halogen compound in water and soil is impossible because of the low contents thereof and because of the relatively large quantity of inorganic halogen. For this analysis a preliminary treatment should always be employed, during which the organic halogen compound is isolated from the water. For this separation several techniques can be used and for the subject invention only the technique of adsorbing to active carbon is relevant.

According to this known technique the organic halogen compounds are adsorbed to active carbon at low pH. After this the active carbon is washed to remove inorganic chloride. After washing the active carbon is combusted and the quantity of absorbed organic halopen compound is determined.

During this washing step the water is filtered from the carbon. This filtering is realized with a polycarbonate based filter. After filtering, both the carbon including the organic halogen compound as well as the filter are burnt in a flow of oxygen at around 1000°C.

However, this method suffers from a number of drawbacks. First of all these filters do have a considerable zero value of substances to be measured because of which the results of the measurements are affected. Furthermore these filters are expensive and are lost after heating at 1000°C.

The invention aims to provide a method as described above not having the drawbacks of the filters according to the prior art.

According to the invention this object is realized in that a reusable filter element comprising a glass material is used for the separation and heating step. Surprisingly it has been found that glass material filters are at least as effectively as polycarbonate based filters but do not have its high initial zero value of halogen compound. As is known glass material is relatively inexpensive and is not lost during heating at 1000°C so that such filter is re-usable.

According to a preferred embodiment of the invention this filter comprises a sleeve of quartz glass having an inserted bottom of quartz fritt.

In the separation step of the method according to the invention the liquid is preferably pressed through the filter.

As described in the introduction the adsorbed material comprises preferably organic halogen compounds. However, it is also possible to use the filter described above in a method for determining organic sulphur. In this method sulphur compounds, being adsorbed to active carbon, are determined after combustion of the assembly by coulometric titration of the $SO_2$ being produced through reduction of chlorate to chloride with silver. By subsequently using both methods a surprisingly simple technique is obtained.

The invention further relates to the use of a glass filter as described in the above as a carrier means for organic halogen compounds or sulphur compounds in a device for the destruction of said compounds. Such a device may be a part of a system for coulometric titration, e.g. as disclosed in NL-A-7801376.

The invention also relates to a method for the determination of the sulphur content in an aqueous liquid comprising
- adsorbtion of sulphur compounds present in said liquid to active carbon,
- combustion of the adsorbed sulphur compounds to form $SO_2$ ;
- coulometric titration of said $SO_2$ in a solution containing a redox system such as chlorate/silver ions.

According to the prior art it was required to carry out the sulphur analysis in two separate steps after the combustion of the sulphur compounds, i.e. first incorporation of the $SO_2$ in a liquid medium and then in a separate step (off-line) analysis by ion chromatography.

The invention will now further be described with reference to several embodiments shown in the drawings in which

fig. 1 shows a filter according to the invention,

fig. 2 shows a filter container according to the invention

fig. 3 shows the arrangement of the furnace in which the filter together with the active carbon has to be introduced and

fig. 4 schematically shows an arrangement for determining of sulphur compositions.

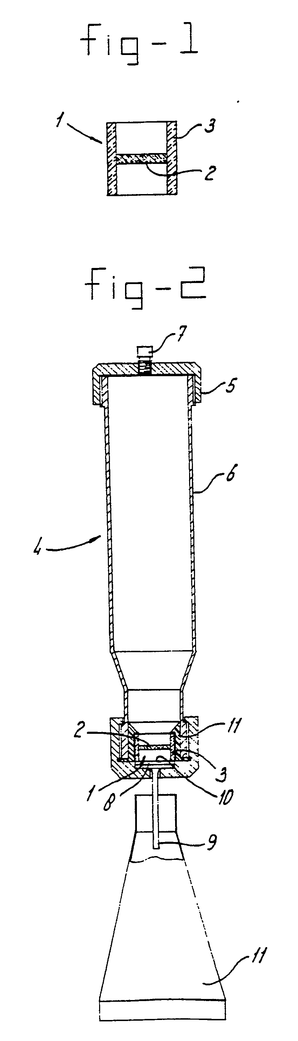

In fig. 1 a filter is shown generally indicated with 1 and comprising a bottom 2 of quartz fritt material and a sleeve 3 comprising glass material. This filter can for instance be introduced in a device for analyzing of organic halogen compounds such as described in the manual of Euroglas B.V. 3rd edition of February 1988. In that case the filter 1 functions to separate an adsorbing material including the substance adsorber from apueous flow. After separation both the filter and the adsorbed material are heated at around 1000°C. By using glass material for the filter a high purity of the filter material can be obtained in a relatively simple and inexpensive way. Furthermore the glass material can be re-used.

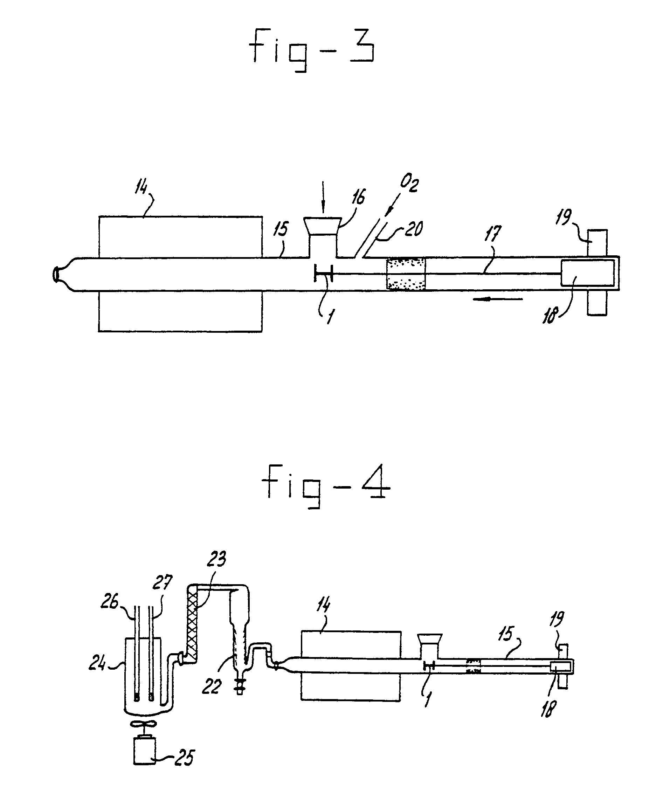

In fig. 2 filter 1 is shown incorporated in a container assembly generally referred to with 4. This container assemble comprises an upper screw cap threadingly engaged on body 6 and provided with quick release connecting means 7 for connection to a (inert) gas supplier. At the lower end of body 6 a lower screw cap 8 is provided also threadingly engaging body 6. In cap 8 a hole is provided through which conduit 9 is inserted. To provide a sealing between filter 1 and conduit 9 gasket 10 is provided. At its upper end filter 1 is sealed by Teflon housing 11. Conduit 9 is connected with retort 11. During use first of all filter 1 body 6 and lower cap 8 are mounted. After that the material to be filtered is introduced in body 6 after which upper cap 5 is closed. To promote the rate of filtering, through connection 7 gas is inserted by which over pressure is realized within container 4. The filter unit of the type as depicted in fig. 2 may comprise further usual means·such as a pressure relief valve.

In fig. 3 it is shown how filter 1 is introduced in furnace 14 after being released from container 4. Filter 1 containing both adsorbing and adsorbed material is introduced in furnace tube 15 through opening 16 and pushed inside the furnace properly by rod 17 at the extremity of which an iron member 18 is provided. By displacing of a magnet 19 iron member will displace to the left in fig. 3 by which filter 1 is introduced in the furnace. The furnace is at elevated temperature 1000°C for determining of organic halogen compounds. Oxygen is introduced through conduit 20.

In fig. 4 a device is shown schematically for determining of organic sulphur in water comprising a combination of adsorbtion to active carbon, heating and coulometric titration. Filter 1 is introduced in tube 15 and is provided with active carbon and organic sulphur compounds adsorber thereto. In furnace 14 both the filter and active carbon including organic sulphur compounds are burnt. Water is absorbed in water adsorber 22 after which the $SO_2$ gases go to silver absorber 23. By using this silver adsorber halogen compositions are removed from the gas leaving furnace 14. After this the $SO_2$ is introduced in titration cell 24 comprising a stirring device 25 as well as two electrodes 26, 27 respectively in which titration cell 24 $SO_2$ is determined by coulometric titration of $SO_2$ through reduction of chlorate to chloride with silver. The device according fig. 4 consitutes a new device by which it is possible to simply determine on line the organic sulphur content.

## Claims

1. A method for analyzing adsorbed material in aqueous liquids comprising the steps of :

– adsorption of said material to be analyzed to activated carbon ;

– separation of said aqueous liquid and said activated carbon including the adsorbed material in a filter element ;

– heating of said filter element containing activated carbon including the adsorbed material in a flow of oxygen of about 1000°C ;

**characterized in that**

a re-usable filter element comprising a glass material is used for the separation and heating step.

2. The method according to claim 1, **wherein** the filter element comprises a sleeve of quartz glass material having an inserted bottom of quartz frit.

3. The method according to claim 1 or 2, **wherein** in the separation step the liquid is pressed through the filter.

4. The method according to claims 1-3, **wherein** the adsorbed material comprises organic halogen compounds.

5. The method according to claims 1-3, **wherein** the adsorbed material comprises sulfur compounds being determined by combustion of sulfur compounds being adsorbed to active carbon and by coulometric titration of the $SO_2$ so formed with a redox system.

## Ansprüche

1. Verfahren zur Analyse von adsorbiertem Material in wässrigen Flüssigkeiten, umfassend die Verfahrensschritte :

– Adsorption des genannten zu analysierenden Materials auf Aktivkohle ;

– Trennung der genannten wässrigen Flüssigkeit und der genannten, das adsorbierte Material einschliessenden Aktivkohle, in einem Filterelement ;
– Erhitzung des genannten Filterelements, welches das adsorbierte Material einschliessende Aktivkohle enthält, in einem Sauerstoffstrom bei etwa 1000°C ; dadurch gekennzeichnet, dass für den Verfahrensschritt der Trennung und der Erhitzung ein ein Glasmaterial enthaltendes wiederverwendbares Filterelement verwendet wird.

2. Verfahren nach Anspruch 1, bei welchem das Filterelement ein Hülse auf Quarzglas-Material mit einem eingesetzten Boden aus gesintertem Quartz umfasst.

3. Verfahren nach Anspruch 1 oder 2, bei welchem im Verfahrensschritt der Trennung die Flüssigkeit durch das Filter gepresst wird.

4. Verfahren nach Ansprüchen 1-3, bei welchem das adsorbierte Material organische Halogenverbindungen umfasst.

5. Verfahren nach den Ansprüchen 1-3, bei welchem das adsorbierte Material Schwefelverbindungen umfasst, die durch Verbrennung von auf Aktivkohle adsorbierten Schwefelverbindungen und coulometrische Titration des so gebildeten $SO_2$ mit einem Redoxystem bestimmt werden.


**Revendications**

1. Procédé d'analyse de matériau adsorbé dans des liquides aqueux, comportant les étapes :
   – adsorption dudit matériau à analyser sur du charbon actif ;
   – séparation dudit liquide aqueux et dudit charbon actif qui inclut le matériau adsorbé, dans un élément filtrant ;
   – chauffage dudit élément filtrant contenant du charbon actif qui inclut le matériau adsorbé, dans un courant d'oxygène à environ 1000°C ;
   caractérisé en ce que
   pour l'étape de séparation et de chauffage est utilisé un filtre réutilisable comportant un matériau de verre.

2. Procédé selon la revendication 1, dans lequel l'élément filtrant comporte une chemise en matériau de verre de quartz dans laquelle est inséré un fond en quartz fritté.

3. Procédé selon la revendication 1 ou 2, dans lequel dans l'étape de séparation le liquide est pressé à travers le filtre.

4. Procédé selon les revendication 1-3, dans lequel le matériau adsorbé comporte des composés organiques halogénés.

5. Procédé selon les revendication 1-3, dans lequel le matériau adsorbé comporte des composés soufrés que sont déterminés par combustion de composés soufrés adsorbés sur charbon actif et par titration coulométrique du $SO_2$ ainsi formé avec un système redox.

# fig-1

# fig-2

# fig-3

# fig-4